(19) Europäisches Patentamt
European Patent Office
Office européen des brevets

(11) **EP 2 238 717 B1**

(12) **FASCICULE DE BREVET EUROPEEN**

(45) Date de publication et mention
de la délivrance du brevet:
**08.08.2018 Bulletin 2018/32**

(51) Int Cl.:
***H04L 1/22*** *(2006.01)*      ***H04L 12/931*** *(2013.01)*
***H04L 12/939*** *(2013.01)*

(21) Numéro de dépôt: **08858285.3**

(22) Date de dépôt: **02.12.2008**

(86) Numéro de dépôt international:
**PCT/EP2008/066576**

(87) Numéro de publication internationale:
**WO 2009/071522 (11.06.2009 Gazette 2009/24)**

(54) **PROCÉDÉ DE COMMUNICATION DE DONNÉES ENTRE ÉQUIPEMENTS TERMINAUX À PARTIR D'UNE PLURALITÉ DE RÉSEAUX DE TYPE ETHERNET D'UN SYSTÈME DE REDONDANCE**

DATENKOMMUNIKATIONSVERFAHREN ZWISCHEN ENDGERÄTEN ÜBER MEHRERE ETHERNET-BASIERENDE NETZWERKE EINES REDUNDANZ-SYSTEMS

METHOD FOR COMMUNICATING DATA BETWEEN TERMINAL DEVICES FROM A PLURALITY OF ETHERNET NETWORKS OF A REDUNDANCY SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **04.12.2007 FR 0708432**

(43) Date de publication de la demande:
**13.10.2010 Bulletin 2010/41**

(73) Titulaire: **Safran Electronics & Defense**
**92100 Boulogne-Billancourt (FR)**

(72) Inventeur: **COLAS, Gilles**
**F-75015 Paris (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A- 1 394 985          US-A1- 2002 152 320**
**US-A1- 2007 076 590**

## Description

La présente invention concerne un système de redondance d'un réseau de type Ethernet.

Des applications, notamment dans le domaine des transports qu'ils soient ferroviaires, routiers ou aériens, requièrent des contraintes particulièrement sévères concernant la fiabilité des réseaux utilisés.

L'une de ces contraintes est d'assurer qu'en cas de panne du réseau, suite par exemple à la rupture d'un lien entre deux équipements terminaux du réseau, les communications entre ces deux équipements terminaux puissent être ré-établies après une interruption bornée dans le temps et dont la durée est connue *a priori.* Dans certains cas, l'application n'autorisera pas la perte de service c'est-à-dire nécessitera que toutes les données perdues durant cette interruption soient ré-émises. On parle alors de réseau à criticité élevée. Dans d'autre cas, la perte de service sera tolérée c'est-à-dire qu'il sera toléré que quelques données soient perdues, on parle alors de réseau à criticité plus faible. Dans ce cas, les pertes de données sont généralement gérées par des couches protocolaires de niveau élevé.

La technologie Ethernet est très largement utilisée pour ce type d'application car les composants correspondants, très répandus dans le commerce, sont peu coûteux.

De plus, un protocole de routage est généralement utilisé sur cette technologie car il permet de résoudre des problèmes de connections en faisant varier les chemins empruntés par les données acheminées, chemins qualifiés de chemins d'accès (US2002/152320, US2007/076590).

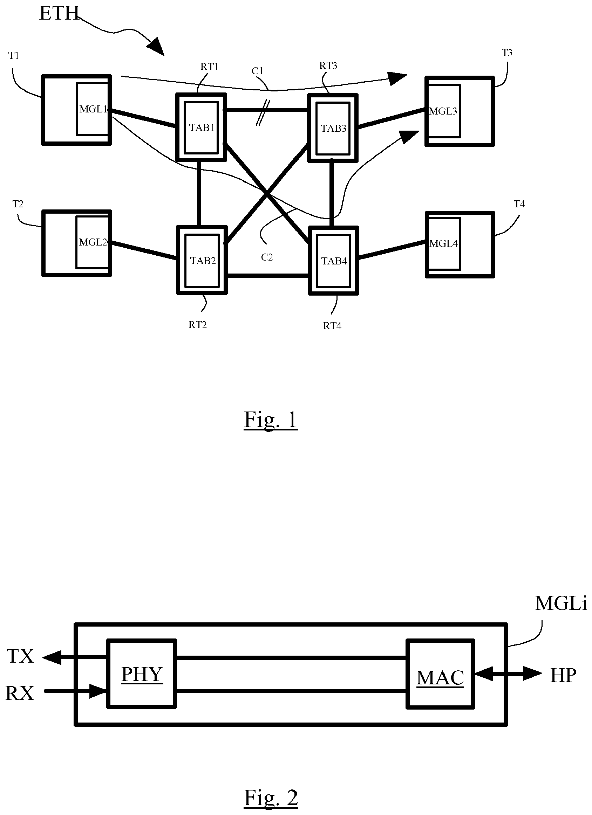

La Fig. 1 représente schématiquement un exemple de réseau Ethernet selon l'état de la technique.

Le réseau Ethernet ETH comporte une pluralité d'équipements terminaux Ti, en l'occurrence quatre, et une pluralité de routeurs RTj, en l'occurrence quatre. La communication entre deux équipements terminaux Ti et $T_{i+1}$ est réalisée via une pluralité de routeurs. Chaque équipement terminal est relié à un routeur par un lien Ethernet physique et les routeurs sont également connectés entre eux de manière à multiplier les possibilités de chemins d'accès entre les différents équipements terminaux.

Dans un tel réseau, chaque équipement terminal Ti comporte un module de gestion de lien MGLi, encore appelé interface Ethernet, dont le but est de permettre l'interfaçage entre un lien Ethernet physique, tel que par exemple un câble, et des couches protocolaires de niveau supérieur de l'équipement terminal Ti qui sont généralement organisées sous la forme d'une pile protocolaire IP (*Internet Protocol*).

La Fig. 2 représente schématiquement l'architecture d'un module de gestion de lien MGLi selon l'état de la technique.

Le module de gestion de lien MGLi possède un port de réception RX et un port d'émission TX connectés à un lien Ethernet physique (non représenté), un module de gestion physique de lien PHY, qui implémente un protocole bas niveau c'est-à-dire de la couche physique du modèle OSI, un module de gestion du média MAC (*Media Access Control* en anglais) qui implémente entre autre le protocole Ethernet et qui permet la communication bi-directionnelle entre la couche physique et les couches protocolaires de niveau supérieur HP, et un bus de données BU qui assure la transmission bi-directionnelle de données entre les modules PHY et MAC. Le bus BU répondant à la norme IEEE MII (*Media Independant Interface* en anglais) est généralement utilisé.

Le module de gestion physique de lien PHY est responsable de la génération et de l'analyse des signaux physiques qui transitent sur le lien Ethernet physique. Le module de gestion du média MAC gère l'analyse et l'assemblage des paquets ainsi que la communication avec les couches protocolaires de niveau supérieur HP. En réception, les signaux qui transitent sur le lien Ethernet sont analysés et transformés en données numériques par le module PHY. Ces données numériques sont ensuite transmises au module MAC qui les analyse sous la forme de paquets ou de trames Ethernet. Ces paquets sont ensuite transmis aux couches protocolaires de niveau supérieur HP. En émission, le module de gestion du média MAC reçoit les données à transmettre des couches protocolaires de niveau supérieur HP, typiquement de la pile protocolaire IP sous la forme de paquets IP. Elle assemble les paquets ou les trames Ethernet véhiculant les données IP et les transmet au module de gestion physique de lien PHY pour leur émission sous la forme de signaux sur le lien Ethernet physique.

Dans un réseau Ethernet tel que celui représenté à la Fig. 1, les équipements terminaux communiquent entre eux via leurs modules de gestion de lien respectifs. De plus, chaque routeur RTi comporte une table de routage TABi qui indique vers quel port doit être dirigée une donnée entrante et ce selon l'adresse de destination de cette donnée. Cette table de routage TABi est préalablement auto-configurée de manière automatique par le routeur RTi.

Ainsi, une fois que chaque routeur RTi a configuré sa table de routage TABi, les équipements terminaux peuvent communiquer entre eux. Prenons l'exemple où les données émises par l'équipement terminal T1 et à destination de l'équipement terminal T3 sont acheminées par le routeur RT1, puis RT3 (flèche référencée C1 à la Fig. 1). Dans le cas où une panne survient sur le lien Ethernet physique entre le routeur RT1 et RT3, symbolisée par les deux traits parallèles obliques, la communication entre les deux équipements terminaux est alors interrompue et chaque routeur RTi doit alors se re-configurer, on parle de convergence du protocole de routage, afin qu'un nouveau chemin d'accès puisse être défini entre les deux équipements terminaux. Par exemple, les données émises par l'équipement terminal T1 passent maintenant par le routeur RT1, RT4 puis RT3 avant d'être reçues par l'équipement terminal T3 (flèche référencée C2).

Le protocole de routage d'un réseau Ethernet permet donc de résoudre le problème de rupture d'un lien entre routeurs de ce réseau. Cependant, la convergence d'un tel protocole, qui se situe au niveau de la couche réseau du modèle OSI, c'est-à-dire à un niveau plus élevé que celui de la couche physique, est complexe à mettre en oeuvre particulièrement lorsque le nombre de routeurs est élevé. De plus, les protocoles de routage classiques ne sont pas forcément déterministes c'est-à-dire que leur convergence n'est pas assurée dans tous les cas de figure.

Il est connu des applications qui mettent en oeuvre un système de redondance d'un réseau Ethernet.

La demande de brevet EP1,394,985 décrit un procédé pour tester chaque chemin possible entre un équipement host et un équipement destinataire et ce quel que soit le réseau Ethernet utilisé par envoi/réception d'un message de test entre cet équipement host et un équipement destinataire unique. A cet effet, dans le cas où un message de test n'est pas reçu pendant une période de temps choisie, un autre message de test est envoyé par l'équipement host à destination d'un équipement sur un autre chemin. Le procédé consiste donc à considérer qu'un autre réseau est inopérant lorsque tous ses chemins ne sont plus valides et l'équipement host utilise alors un autre réseau.

Prenons l'exemple du réseau AFDX (Avionics Full DupleX) développé et standardisé par les industriels européens de l'avionique pour équiper l'Airbus A380. Il s'agit d'un réseau destiné à servir de support aux communications internes à un avion (ARINC 664 (partie 7)).

Le réseau AFDX met en oeuvre la redondance d'un réseau Ethernet par un autre réseau Ethernet équivalent. Chaque trame transitant sur le réseau AFDX est envoyée en même temps sur les deux réseaux redondants l'un de l'autre et un système de numérotation des trames complexe permet au récepteur d'associer les deux trames redondantes reçues. Le réseau AFDX est fiable, déterministe, n'engendre pas de perte de service en cas de panne de l'un des deux réseaux. Par contre, la mise en oeuvre du réseau AFDX est très compliquée et donc très onéreuse du fait qu'elle fait intervenir, notamment, des protocoles de la couche réseau et un protocole de gestion de l'émission/réception des trames sur ces deux réseaux. Malgré que la technologie Ethernet est utilisée, technologie qui permet de réduire les coûts liés aux composants matériels tels que des routeurs, le coût de mise en oeuvre du réseau AFDX reste toutefois élevé.

De plus, la technologie Ethernet comporte un inconvénient majeur dans le cadre de son utilisation pour le déploiement d'un tel système de redondance d'un réseau Ethernet. En effet, le fait que la fiabilité apportée par la technologie Ethernet est implémentée par un protocole de routage de la couche réseau, le remplacement d'un lien défectueux par un autre lien requiert la convergence du protocole de routage qui s'avère, en pratique, trop longue pour être acceptable. La présente invention vise à remédier à ces inconvénients en proposant une solution simple et peu coûteuse en terme de mise en oeuvre et de matériel qui est applicable à un système de redondance d'un réseau Ethernet étoilé à faible criticité. Plus précisément, la présente invention consiste à implémenter au niveau de la couche la plus proche physiquement du lien, c'est-à-dire au niveau du module de gestion de lien, un procédé de communication dont le but est de déterminer un premier réseau du système de redondance qui sera utilisé pour les communications entre eux des équipements terminaux, de contrôler le fonctionnement de ce réseau tout au long de ces communications et de déterminer un nouveau réseau du système de redondance en cas de panne du réseau utilisé jusqu'alors.

Ainsi, ce procédé est transparent et non intrusif au niveau des couches protocolaires de niveau supérieur évitant ainsi une quelconque modification des protocoles de ces différentes couches supérieures. De plus, les routeurs peuvent alors être remplacés par des commutateurs qui sont bien moins coûteux du fait que toute l'intelligence de fiabilité est reportée au niveau de la couche physique.

Pour cela, la présente invention concerne un procédé de communication de données entre au moins deux équipements terminaux à partir d'une pluralité de réseaux de type Ethernet indépendants les uns des autres et permettant chacun la communication de données entre lesdits au moins deux équipements terminaux. Le procédé est caractérisé en ce qu'il comporte une étape de détermination d'un premier réseau Ethernet, dit opérationnel, parmi un ensemble de réseaux potentiellement opérationnels obtenu à partir de ladite pluralité de réseaux Ethernet, une étape de contrôle du fonctionnement dudit réseau Ethernet opérationnel et une étape de détermination d'un nouveau réseau Ethernet parmi ledit ensemble de réseaux potentiellement opérationnels.

Selon un mode de réalisation, la détermination dudit réseau Ethernet opérationnel est basée sur la communication entre lesdits équipements terminaux de trames Ethernet dédiées.

Selon un mode de réalisation de l'étape de détermination d'un premier réseau Ethernet opérationnel, mode correspondant au cas où chaque équipement terminal comporte un module de gestion physique de lien par réseau Ethernet, au cours de ladite étape de détermination d'un premier réseau Ethernet opérationnel, d'une part, les modules de gestion physique de lien relatifs aux réseaux Ethernet dudit ensemble de réseaux potentiellement opérationnels sont scrutés tant qu'une trame dédiée n'est pas reçue via l'un desdits modules de gestion physique de lien, et, d'autre part, des trames dédiées sont émises successivement via les modules de gestion physique de lien relatifs aux réseaux Ethernet dudit ensemble de réseaux potentiellement opérationnels, dans le cas où une trame dédiée est reçue via un desdits modules de gestion physique de lien, le réseau Ethernet relatif audit module de gestion physique de lien est considéré comme étant opérationnel.

Selon un mode de réalisation, chaque trame dédiée est émise via un module de gestion physique de lien après une valeur de temps aléatoire choisie parmi une plage de valeurs dont la borne inférieure est au moins égale à deux fois le temps de transmission d'une trame entre deux desdits équipements terminaux.

Selon un mode de réalisation de l'étape de contrôle de fonctionnement du réseau Ethernet opérationnel, d'une part, le module de gestion physique de lien qui est relatif audit réseau opérationnel est scruté, pendant une valeur de temps préalablement définie qui est au moins égale à deux fois le temps de transmission d'une trame entre deux desdits équipements terminaux, dans l'attente de la réception d'une trame dédiée émise par un équipement terminal, et, d'autre part, des trames dédiées sont émises successivement via le module de gestion physique de lien relatif au réseau opérationnel, et ce tant que l'équipement terminal est connecté, dans le cas où une trame dédiée est reçue pendant ladite valeur de temps préalablement définie, le réseau Ethernet opérationnel est considéré comme fonctionnant correctement, et dans le cas où aucune trame dédiée n'est reçue pendant ladite valeur de temps préalablement définie, le réseau Ethernet jusque là opérationnel est considéré comme inopérant, ledit ensemble de réseaux potentiellement opérationnels étant alors mis à jour par suppression du réseau Ethernet devenu inopérant.

Selon un mode de réalisation, chaque trame dédiée est émise via le module de gestion physique de lien relatif audit réseau opérationnel après une valeur de temps correspondante au temps pendant lequel il est acceptable d'avoir une perte de service sur ledit réseau opérationnel.

Le procédé est avantageux notamment car il ne nécessite pas de traitements complexes au niveau bas qui sont consommateurs en ressource.

Selon ces aspects matériels, la présente invention concerne un dispositif mettant en oeuvre ce procédé ainsi qu'un équipement terminal et un système de redondance d'un réseau de type Ethernet.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints dans lesquels :

la Fig. 1 représente schématiquement un exemple de réseau Ethernet selon l'état de la technique,
la Fig. 2 représente schématiquement l'architecture d'un module de gestion de lien selon l'état de la technique,
la Fig. 3 représente schématiquement un exemple d'un système de redondance d'un réseau Ethernet étoilé selon la présente invention,
la Fig. 4 représente schématiquement l'architecture d'un module de gestion de lien selon la présente invention,
la Fig. 5 représente schématiquement un diagramme des étapes d'un procédé de communication entre équipements terminaux d'un système de redondance décrit selon la Fig. 3, et
la Fig. 6 représente schématiquement un mode de réalisation d'un dispositif mettant en oeuvre le procédé décrit en relation avec la Fig. 5.

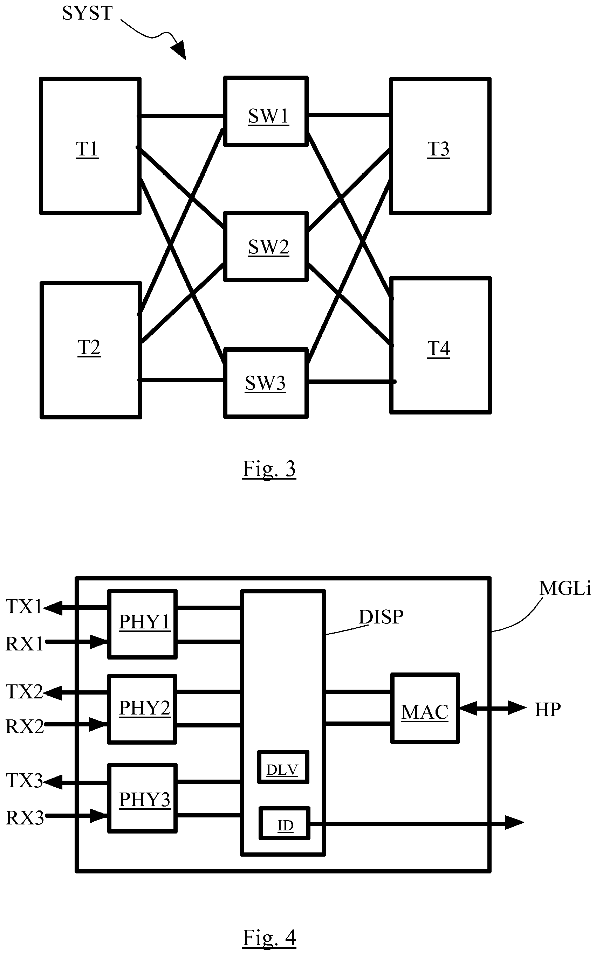

La Fig. 3 représente schématiquement un exemple d'un système de redondance d'un réseau Ethernet selon la présente invention.

Le système de redondance SYST comporte un réseau initial ETH1 de type Ethernet étoilé c'est-à-dire que la communication entre équipements terminaux via ce réseau, en l'occurrence entre quatre équipements T1 à T4, est réalisée via leur module de gestion de lien et que chaque équipement terminal Ti est connecté à un seul et même commutateur SW1. Le commutateur SW1 a pour fonction de mettre en relation l'un de ses ports d'entrée avec l'un de ses ports de sortie et ce de manière non évolutive au cours du temps. En effet, bien que le commutateur SW1 comporte une table qui définit les relations entre ses différents ports, ces relations ne peuvent être modifiées par un protocole comme cela est possible dans le cas d'un routeur. La table du commutateur SW1 est définie, par exemple, en fonction de la connexion des équipements terminaux sur chacun de ses ports. On comprendra que du fait que l'usage de tels commutateurs ne permet pas la mise en oeuvre d'un protocole de reconfiguration, appelé protocole de routage dans le cas de routeur, le coût d'achat de ce commutateur est bien moins élevé que celui d'un routeur. C'est l'un des avantages de la présente invention.

Le système SYST comporte également deux autres réseaux Ethernet étoilés ETH2 et ETH3. Le réseau ETH2 respectivement ETH3 utilise un commutateur SW2 respectivement SW3. Les trois réseaux ETH1, ETH2 et ETH3 sont dits indépendants les uns des autres du fait qu'ils n'utilisent pas les mêmes commutateurs. On peut remarquer cependant que chacun d'entre eux permet que soient établies des communications entre les différents équipements terminaux Ti. Ils sont dits redondants les uns des autres d'où l'appellation du système SYST.

Selon une caractéristique de la présente invention, chaque équipement terminal Ti comporte un module de gestion de lien particulier décrit en relation avec la Fig. 4.

La Fig. 4 représente schématiquement l'architecture d'un module de gestion de lien selon la présente invention.

Le module de gestion de lien MGLi d'un équipement terminal Ti comporte autant de modules de gestion physique de lien PHYj que de réseaux Ethernet du système SYST, en l'occurrence trois, et possède un port de réception RXj et un port d'émission TXj par module de gestion physique de lien PHYj (j=l à 3). Chaque couple de ports RXj, TXj est connecté à un lien Ethernet physique différent qui relie l'équipement terminal Ti à l'un des commutateurs SWj. Chaque module de gestion physique du lien PHYj est ainsi responsable de la génération et de l'analyse des signaux physiques qui transitent sur un lien Ethernet physique qui relie l'équipement terminal Ti à l'un des trois commutateurs SWj.

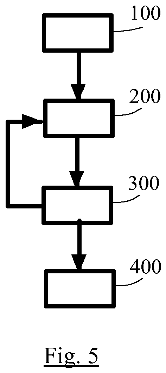

De plus, le module de gestion de lien MGLi comporte un module de gestion du média MAC et un dispositif DISP qui met en oeuvre le procédé de communication décrit en relation avec la Fig. 5.

Le module de gestion MAC et chaque module de gestion physique de lien PHYj sont reliés au dispositif DISP par un bus BU qui assure la transmission bi-directionnelle de données entre les modules MAC et PHYj et le dispositif. Le bus BU répondant à la norme IEEE MII (*Media Independant Interface* en anglais) peut par exemple être utilisé.

Le module de gestion de lien MGLi comporte également une unité de surveillance DLV dont on verra l'utilité un peu plus loin et une interface ID permettant aux couches protocolaires de niveau supérieur HP de communiquer avec le dispositif DISP.

La Fig. 5 représente un diagramme des étapes d'un procédé de communication de données entre équipements terminaux d'un système de redondance SYST d'un réseau de type Ethernet selon la présente invention.

Le système de redondance SYST, dont un exemple est décrit en relation avec la Fig. 3, comporte une pluralité d'équipements terminaux Ti et une pluralité de réseaux Ethernet indépendants l'un de l'autre et accessibles de chacun des équipements terminaux Ti. Chaque équipement terminal Ti comporte autant de modules de gestion physique de lien $PHI_{i,j}$ que de réseaux Ethernet du système SYST tel que cela a été décrit en relation avec la Fig. 4.

Le procédé est basé sur la détermination d'un réseau Ethernet, parmi la pluralité de réseaux Ethernet du système SYST, utilisé pour la communication des données entre un équipement terminal Ti et au moins un autre équipement terminal du système SYST.

Cette détermination est évolutive au cours de la communication de l'équipement terminal Ti avec ce ou ces autres équipements terminaux. En effet, dans le cas où le réseau Ethernet initialement déterminé tombe en panne, le procédé permet de déterminer un autre des réseaux Ethernet parmi la pluralité de réseaux Ethernet.

Par la suite, le réseau Ethernet utilisé pour la communication entre les équipements terminaux du système SYST est dit opérationnel c'est-à-dire qu'il est utilisé par chaque équipement terminal Ti pour émettre des données émanant des couches protocolaires de niveau supérieur vers au moins un autre équipement terminal via le module de gestion physique de lien relatif à ce réseau Ethernet et recevoir des données émises par d'autres équipements terminaux via ce module de gestion physique de lien de l'équipement terminal Ti qui est noté par la suite $PHI_{i,j}^{V}$, l'indice i désignant l'équipement terminal considéré, l'indice j identifiant l'un des modules de gestion physique de lien que comporte l'équipement terminal considéré et l'exposant V désignant que ce module est relatif au réseau Ethernet considéré comme opérationnel par l'équipement terminal considéré. Par opposition au caractère opérationnel d'un réseau Ethernet, un réseau Ethernet du système SYST est dit, par la suite, inopérant lorsqu'un équipement terminal Ti a détecté une panne sur ce réseau. Par extension, le caractère d'un module de gestion physique de lien est celui du réseau Ethernet avec lequel il est en relation.

Ainsi, les modules de gestion physique de lien de chaque équipement terminal Ti se différencient les uns des autres selon leur caractère qui peut être inopérant, opérationnel ou indéterminé (ni inopérant, ni opérationnel).

Par la suite, on considérera le mode de réalisation dans lequel un ensemble Ei, propre à chaque équipement terminal Ti, est formé d'informations qui identifient les réseaux Ethernet de la pluralité de réseaux Ethernet du système SYST qui ne sont pas considérés par cet équipement terminal Ti comme étant inopérants. Ceci évite que ne soient considérés comme potentiellement opérationnels des réseaux du système SYST qui ont été considérés par l'équipement terminal Ti comme étant en panne.

On peut noter que l'ensemble Ei est formé de tous les réseaux Ethernet de la pluralité de réseaux Ethernet lorsque aucune indication ne permet de préciser le caractère de chaque réseau Ethernet du système SYST. C'est le cas, par exemple, lors du démarrage du module de gestion de lien d'un équipement terminal Ti lorsque le caractère des modules de gestion physique de lien n'a pas été préalablement mémorisé. On peut également noter, comme on le verra par la suite, que cet ensemble Ei peut être mis à jour par suppression d'un réseau Ethernet devenant inopérant et par ajout d'un réseau Ethernet jusque là inopérant qui serait remis en service une fois la panne sur ce réseau réparée.

La détermination du réseau Ethernet opérationnel est prise d'un commun accord par tous les équipements terminaux du système SYST. Pour cela, elle est basée, selon la présente invention, sur la communication entre ces équipements terminaux de trames Ethernet notée TRE qui sont dédiées c'est-à-dire que chacune d'entre elles comporte une information qui permet à un module de gestion physique de lien de la différencier des autres trames Ethernet susceptibles de transiter par ce module. Cette information est par exemple l'identifiant MAC de la trame TRE qui est un identifiant dédié à ce type de trame. Par communication de trames dédiées TRE entre équipements terminaux, il faut entendre l'émission de chacune de ces trames par un équipement terminal et la réception de cette trame par chacun de ces autres équipements terminaux.

Le procédé, destiné à être mis en oeuvre par chaque équipement terminal Ti du système SYST, comporte une étape 100 de détermination d'un premier réseau Ethernet opérationnel parmi l'ensemble Ei. Cette étape est exécutée lors du démarrage du module de gestion de lien MGLi d'un équipement terminal Ti c'est-à-dire lorsque aucune indication mémorisée préalablement ne permet de spécifier parmi la pluralité des réseaux Ethernet du système SYST celui qui est opérationnel.

Au cours de l'étape 100, les modules de gestion physique de lien $PHI_{i,j}$ relatifs aux réseaux Ethernet de l'ensemble Ei propre à un équipement terminal Ti sont scrutés tant qu'une trame TRE n'est pas reçue via l'un de ces modules.

De plus, au cours de l'étape 100, des trames TRE sont émises successivement via les modules de gestion physique de lien $PHI_{i,j}$ relatifs aux réseaux Ethernet de l'ensemble Ei.

Dans le cas où une trame TRE est reçue via un module de gestion physique de lien, appelé $PHI_{i,j}^{V}$, le réseau Ethernet relatif à ce module de gestion physique de lien $PHI_{i,j}^{V}$ est alors considéré comme étant opérationnel mettant ainsi fin à l'étape 100.

L'étape 100 est essentielle car elle permet à un équipement terminal Ti nouvellement connecté au système SYST de se synchroniser sur les équipements terminaux déjà connectés au système SYST et ce grâce à la scrutation de chacun de ses modules de gestion physique de lien $PHI_{i,j}$ afin de déterminer quel est le réseau Ethernet considéré comme opérationnel par les autres équipements terminaux connectés. De plus, dans le cas où un équipement terminal Ti est le premier à se connecter au système de redondance SYST, l'étape 100 permet de proposer un réseau Ethernet opérationnel à tout autre équipement terminal qui viendrait se connecter au système SYST, ceci évitant à tout équipement terminal nouvellement connecté de considérer de manière isolée qu'un réseau Ethernet est opérationnel alors que les autres équipements terminaux connectés considèrent ce réseau Ethernet comme inopérant.

Selon un mode de réalisation de l'étape 100, un premier module de gestion physique de lien $PHI_{i,j}$ est considéré. Une première trame TRE est alors émise via ce module de gestion physique de lien $PHI_{i,j}$. Après une valeur de temps aléatoire TEMP1 choisie parmi une plage de valeurs RTEMP dont la borne inférieure est au moins égale à deux fois le temps de transmission d'une trame entre deux équipements terminaux du système SYST, c'est-à-dire à au moins la somme entre le temps pour qu'un équipement terminal connecté au réseau Ethernet relatif au module de gestion physique de lien $PHI_{i,j}$ en cours de scrutation puisse recevoir la trame TRE émise par un équipement terminal Ti et le temps pour que l'équipement terminal Ti puisse recevoir la trame TRE émise par un autre équipement terminal du système SYST, une seconde trame TRE est émise et ainsi de suite jusqu'à ce qu'une valeur de temps TEMP2 soit écoulée depuis l'émission de ladite première trame TRE sur ledit module de gestion physique de lien $PHI_{i,j}$. Un autre module de gestion physique de lien $PHI_{i,j+1}$ est alors considéré et des trames TRE sont alors émises comme expliqué ci-dessus.

Ce mode de réalisation du procédé est particulièrement avantageux en cas de démarrage simultané du module de gestion de lien de plusieurs équipements terminaux. En effet, le caractère aléatoire de la valeur de temps TEMP1 permet de diminuer fortement la probabilité de démarrage simultané de ces équipements terminaux et par conséquent d'augmenter d'autant la probabilité que ces équipements terminaux puissent déterminer le même réseau Ethernet opérationnel par l'échange de trame TRE. Une fois qu'un réseau Ethernet a été déterminé comme étant opérationnel, c'est-à-dire qu'au moins deux équipements terminaux sont connectés à ce réseau et que des trames TRE ont été échangées, des données provenant des couches protocolaires de niveau supérieur HP de ces dits au moins deux équipements terminaux peuvent être émises et/ou reçues via leurs modules de gestion physique de lien opérationnels respectifs.

De plus, une fois qu'un réseau Ethernet a été déterminé comme étant opérationnel, l'étape 100 est suivie d'une étape 200 de contrôle du fonctionnement du réseau Ethernet opérationnel. Pour cela, chaque équipement terminal Ti scrute son module de gestion physique de lien $PHI_{i,j}^{V}$ pendant une valeur de temps TEMP3 préalablement définie qui est au moins égale à deux fois le temps de transmission d'une trame entre deux équipements terminaux du système SYST, et ce dans l'attente de la réception d'une trame TRE émise par un autre équipement terminal.

Dans le cas où une trame TRE est reçue pendant la valeur le temps TEMP3, il est considéré que le réseau Ethernet opérationnel fonctionne correctement et la scrutation du module de gestion physique de lien $PHI_{i,j}^{V}$ est itérée tant que l'équipement terminal est connecté au système de redondance SYST.

Au cours de l'étape 200, des trames TRE sont émises successivement via le module de gestion physique de lien $PHI_{i,j}^{V}$ relatif à ce réseau opérationnel tant que l'équipement terminal est connecté au système de redondance.

Selon un mode de réalisation de l'étape 200, une première trame TRE est émise via le module de gestion physique de lien $PHI_{i,j}^{V}$.

Après une valeur de temps TEMP4 correspondant au temps pendant lequel il est acceptable d'avoir une perte de service sur le réseau opérationnel, une seconde trame TRE est alors émise et ainsi de suite.

Dans le cas où aucune trame TRE n'est reçue pendant la valeur de temps TEMP3, le réseau Ethernet jusque là opérationnel est considéré comme inopérant, c'est-à-dire qu'il est considéré qu'une panne est survenue sur ce réseau. L'ensemble Ei est alors mis à jour par suppression de l'information qui identifie le réseau Ethernet devenu inopérant.

Selon un mode de réalisation, l'information identifiant le réseau Ethernet devenu inopérant est enregistrée.

Selon une variante de ce mode de réalisation, l'identifiant, par exemple l'adresse MAC, de l'équipement terminal qui a considéré que le réseau Ethernet jusque là opérationnel est devenu inopérant est enregistré.

Une fois que le réseau Ethernet jusque là opérationnel est devenu inopérant, l'étape 200 est suivie d'une étape 300 de détermination d'un nouveau réseau Ethernet opérationnel de l'ensemble Ei.

Au cours de l'étape 300, les modules de gestion physique de lien $PHI_{i,j}$ de l'ensemble Ei propre à l'équipement terminal Ti sont scrutés tant qu'une trame TRE n'est pas reçue via l'un de ces modules tel que expliqué lors de la description de l'étape 100.

De plus, au cours de l'étape 100, des trames TRE sont émises successivement via les modules de gestion physique de lien $PHI_{i,j}$ de l'ensemble Ei tel que expliqué lors de la description de l'étape 100.

Dans le cas où une trame TRE est reçue via un module de gestion physique de lien $PHI_{i,j}$, le réseau Ethernet relatif à ce module de gestion physique de lien $PHI_{i,j}$ est alors considéré comme étant opérationnel mettant ainsi fin à l'étape 300. L'étape 300 est alors suivie de l'étape 200.

Selon un mode de réalisation de l'étape 300, un premier module de gestion physique de lien $PHI_{i,j}$ de l'ensemble Ei est considéré. Une première trame TRE est alors émise via ce module de gestion physique de lien $PHI_{i,j}$. Après une valeur de temps aléatoire TEMP5 choisie parmi la plage de valeurs RTEMP, une seconde trame TRE est alors émise et ainsi de suite jusqu'à ce qu'une valeur de temps TEMP6 soit écoulée depuis l'émission de ladite première trame TRE sur ledit module de gestion physique de lien $PHI_{i,j}$. Un autre module de gestion physique de lien $PHI_{i,j+1}$ est alors considéré et des trames TRE sont alors émises comme expliqué ci-dessus.

Selon un mode de réalisation du procédé, l'ensemble Ei propre à chaque équipement terminal Ti est une liste ordonnée d'informations identifiant chaque réseau Ethernet tel que leur numéro par exemple.

Cette liste est ordonnée afin de privilégier la connexion avec des réseaux Ethernet particuliers du système de redondance et ce à des fins, par exemple, de maintenance de ces réseaux Ethernet. En effet, en définissant une telle liste ordonnée, il est possible de vérifier, à partir du procédé, si le réseau Ethernet relatif à un module de gestion physique de lien fonctionne correctement. Cette liste peut bien évidemment évoluer au cours du temps selon, en particulier, la fréquence d'utilisation des différents réseaux Ethernet. Ainsi, par exemple, les réseaux Ethernet qui sont très peu utilisés sont positionnés dans les premiers éléments de la liste. Ceci permettra de contrôler si ces réseaux Ethernet fonctionnent correctement et ainsi de s'assurer du bon fonctionnement de l'ensemble des réseaux Ethernet du système de redondance.

Le procédé comporte également une étape de surveillance 400. Cette étape est destinée à fournir un diagnostic concernant l'évolution du caractère de chaque réseau Ethernet du système de redondance. Ainsi, au cours de cette étape, une information identifiant le réseau Ethernet opérationnel et les informations enregistrées au cours l'étape 200 qui identifient les réseaux inopérants sont obtenues. On rappelle que ces informations sont maintenues à jour au cours de l'étape 200, c'est-à-dire tant que l'équipement terminal Ti est connecté au système de redondance SYST ou lorsqu'un réseau Ethernet considéré inopérant a été remis en fonctionnement lors d'une phase de maintenance.

A partir de ces informations, des statistiques peuvent être calculées et/ou un historique de l'évolution du fonctionnement de chacun des réseaux Ethernet du système de redondance obtenu.

Ces informations et/ou statistiques et/ou historique sont éventuellement émis vers les couches protocolaires de niveau supérieur HP pour être par exemple analysés par un administrateur du système de redondance ou être mémorisés. L'étape de surveillance 400 peut être mise en oeuvre, par exemple, suite à une requête émise provenant des couches protocolaires de niveau supérieur HP telle qu'une commande de l'administrateur ou être mise en oeuvre périodiquement.

Des requêtes de type SNMP (*Simple Network Management Protocol* en anglais) peuvent être utilisées pour la mise en oeuvre de l'étape de surveillance.

A partir de ces informations, des alarmes peuvent également être générées. Ces alarmes sont par exemple envoyées vers les couches protocolaires de niveau supérieur HP afin d'en informer un administrateur ou de provoquer l'activation d'un processus de dépannage.

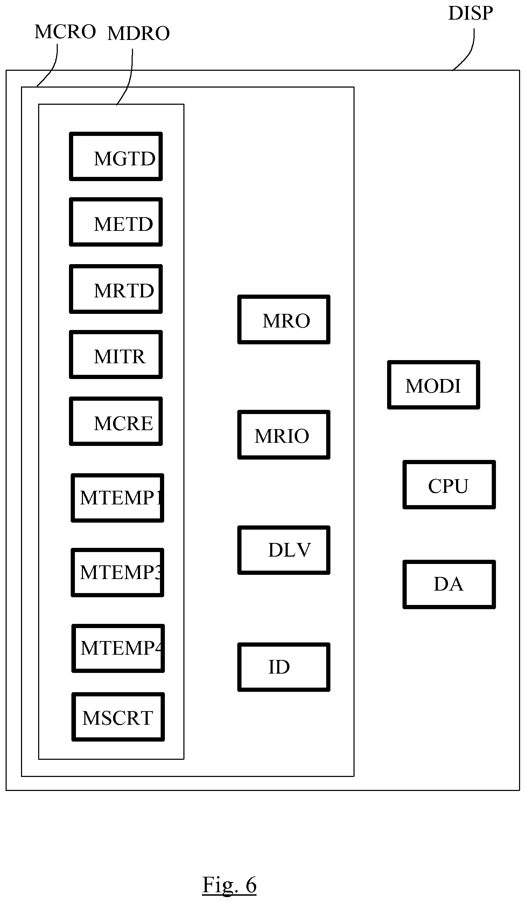

La Fig. 6 représente schématiquement un mode de réalisation du dispositif DISP mettant en oeuvre le procédé décrit en relation avec la Fig. 5.

Le dispositif DISP est destiné à être mis en oeuvre au niveau du module de gestion de lien de chaque équipement terminal Ti d'un système de redondance SYST tel que décrit précédemment.

Le dispositif DISP comporte des moyens MDRO pour déterminer un réseau Ethernet opérationnel parmi un ensemble de réseaux potentiellement opérationnels obtenu à partir de la pluralité de réseaux Ethernet du système SYST, et des moyens MCRO pour contrôler le fonctionnement du réseau Ethernet opérationnel.

Selon un mode de réalisation, le dispositif DISP comporte des moyens MGTD pour générer une trame Ethernet dédiée TRE, des moyens METD pour émettre une trame dédiée TRE via l'un des modules de gestion physique de lien de l'équipement terminal Ti, des moyens MRTD pour recevoir une trame Ethernet via l'un des modules de gestion physique de lien et des moyens MITR pour identifier qu'une trame Ethernet reçue via l'un des modules de gestion physique de lien est une trame dédiée TRE. Le dispositif DISP comporte également des moyens MCRE pour choisir l'un des modules de gestion physique, des moyens MTEMP1 pour choisir une valeur de temps aléatoire parmi une plage de valeurs dont la borne inférieure est au moins égale à deux fois le temps de transmission d'une trame entre deux desdits équipements terminaux, des moyens MTEMP3 pour obtenir une valeur de temps préalablement définie qui est au moins égale à deux fois le temps de transmission d'une trame entre deux desdits équipements terminaux, des moyens MTEMP4 pour obtenir une valeur de temps correspondant au temps pendant lequel il est acceptable d'avoir une perte de service sur ledit réseau opérationnel, des moyens MSCRT pour scruter un module de gestion physique de lien dans l'attente de la réception d'une trame dédiée émise par un équipement terminal. L'ensemble de ces moyens es utilisé par les moyens MDRO afin de mettre en oeuvre l'étape 100 et 300 du procédé de communication décrit précédemment et par les moyens MCRO pour mettre en oeuvre l'étape 200.

Les moyens MDRO utilisent également des moyens MRO pour désigner comme étant opérationnel le réseau Ethernet relatif à un module de gestion physique de lien via lequel une trame dédiée TRE a été reçue et des moyens MRIO pour désigner comme étant inopérant le réseau Ethernet opérationnel lorsque aucune trame dédiée n'a été reçue pendant une valeur de temps préalablement définie qui est au moins égale à deux fois le temps de transmission d'une trame entre deux desdits équipements terminaux.

Le dispositif DISP comporte également des moyens MODI pour obtenir une information identifiant le réseau Ethernet opérationnel et des informations identifiant le ou les réseaux inopérants et des moyens pour calculer des statistiques et/ou générer des alarmes et/ou obtenir un historique de l'évolution du fonctionnement de chacun des réseaux Ethernet.

De plus le dispositif comporte une unité de surveillance DLV dont le but est de mettre en oeuvre l'étape de surveillance 400 du procédé et une interface ID permettant aux couches protocolaires de niveau supérieur HP de communiquer avec le dispositif DISP pour notamment obtenir des informations identifiant le ou les réseaux inopérants.

Le dispositif DISP comporte enfin une unité centrale de traitement CPU destinée à recevoir des instructions nécessaires à la mise en oeuvre du procédé de communication et des données mémorisées sur un support de données DA pouvant alors par exemple être matérialisés par un disque dur, lesdites instructions définissant les étapes de détermination d'un réseau Ethernet opérationnel parmi la pluralité de réseaux Ethernet et de contrôle du fonctionnement du réseau Ethernet opérationnel dont l'exécution par l'unité centrale de traitement CPU permettra la communication de données entre au moins deux équipements terminaux à partir de la pluralité de réseaux Ethernet du système de redondance, les données DA incluant ici en particulier une information identifiant le réseau Ethernet opérationnel et des informations identifiant le ou les réseaux inopérants.

Ces instructions pourront être aisément modifiées si cela s'avère nécessaire, et pourront former un logiciel apte à être téléchargé sur le support de données si celui-ci est réinscriptible, comme c'est le cas par exemple pour un disque dur, un CD-RW, un DVD-RAM ou un disque magnéto-optique. Il pourra également être programmé sur un microprocesseur. Un support de données incluant ces instructions et des données DA pourra alternativement être amovible et consister par exemple en un disque à lecture seule de type CD-ROM ou DVD-ROM fourni à l'utilisateur du système par un prestataire de services de fourniture de programmes.

## Revendications

1. Procédé de communication de données entre au moins deux équipements terminaux à partir d'une pluralité de réseaux de type Ethernet indépendants les uns des autres et permettant chacun la communication de données entre les dits au moins deux équipements terminaux, chaque équipement terminal comprenant une pluralité de modules de gestion physique de lien (PHYj), chaque module de gestion physique de lien (PHYj) étant associé à un des réseaux Ethernet, chaque équipement terminal comprenant un module de gestion du média (MAC) qui implémente entre autre le protocole Ethernet, le procédé étant exécuté par un dispositif (DISP) relié au module de gestion du média (MAC) d'un équipement terminal et à chaque module de gestion physique (PHYj) dudit équipement terminal et étant **caractérisé en ce qu'**il comporte :

   - une étape (100) de détermination d'un réseau Ethernet, dit opérationnel, parmi ladite pluralité de réseaux Ethernet, au cours de laquelle au moins un des modules de gestion physique de lien est scruté, pendant une valeur préalablement choisie d'une période de temps (TEMP), dans l'attente de la réception d'une trame dédiée (TRE) émise par un équipement terminal,
   - dans le cas où une trame dédiée (TRE) n'est pas reçue pendant ladite valeur choisie de la période de temps (TEMP), un autre module de gestion physique de lien est scruté, et
   - dans le cas où une trame dédiée (TRE) est reçue pendant ladite valeur choisie de la période de temps (TEMP), le réseau Ethernet relatif audit module de gestion physique de lien en cours de scrutation est considéré comme étant opérationnel, et

- une étape (200) de contrôle du fonctionnement dudit réseau Ethernet opérationnel.

**2.** Procédé selon la revendication 1, **caractérisé en ce qu'**au cours de ladite étape (200) de contrôle de fonctionnement du réseau Ethernet opérationnel, le module de gestion physique de lien qui est relatif audit réseau opérationnel est scruté, pendant une valeur préalablement choisie d'une période de temps (TEMP), dans l'attente de la réception d'une trame dédiée émise par un équipement terminal,

- dans le cas où une trame dédiée (TRE) est reçue pendant ladite valeur choisie de la période de temps (TEMP), une trame dédiée (TRE) est émise via le module de gestion physique de lien relatif audit réseau opérationnel, et
- dans le cas où une trame dédiée (TRE) n'est pas reçue pendant ladite valeur choisie de la période de temps (TEMP), le réseau Ethernet jusque là opérationnel est considéré comme inopérant, et ladite étape de contrôle de fonctionnement du réseau Ethernet opérationnel est alors suivie de ladite étape (100) de détermination d'un réseau Ethernet opérationnel.

**3.** Procédé selon la revendication 1, **caractérisé en ce qu'**au cours de ladite étape (100) de détermination d'un réseau Ethernet opérationnel, au moins un des modules de gestion physique de lien est scruté, pendant une valeur préalablement choisie d'une période de temps (TEMP), dans l'attente de la réception d'un nombre de trames égal au nombre d'équipements terminaux susceptibles d'émettre une trame dédiée (TRE),

- dans le cas où une trame dédiée (TRE) susceptible d'être émise par un équipement terminal n'a pas été identifiée comme étant reçue pendant la valeur choisie de la période de temps (TEMP), un autre module de gestion physique de lien est scruté, et
- dans le cas où une trame dédiée (TRE) émise par chaque équipement terminal a été identifiée comme étant reçue pendant la valeur choisie de la période de temps (TEMP), le réseau Ethernet relatif audit module de gestion physique de lien en cours de scrutation est considéré comme étant opérationnel.

**4.** Procédé selon la revendication 1 ou 3, **caractérisé en ce qu'**au cours de ladite étape (200) de contrôle de fonctionnement du réseau Ethernet opérationnel, le module de gestion physique de lien qui est relatif audit réseau opérationnel est scruté, pendant une valeur préalablement choisie d'une période de temps (TEMP), dans l'attente de la réception d'autant de trames dédiées (TRE) que d'équipements terminaux susceptibles d'émettre des trames dédiées (TRE),

- dans le cas où une trame dédiée (TRE) émise par chaque équipement terminal a été identifiée comme étant reçue pendant la valeur choisie de la période de temps (TEMP), une trame dédiée (TRE) est émise via le module de gestion physique de lien relatif audit réseau opérationnel, et
- dans le cas où une trame dédiée (TRE) susceptible d'être émise par un équipement terminal n'a pas été identifiée comme étant reçue pendant la valeur choisie de la période de temps (TEMP), le réseau Ethernet jusque là opérationnel est considéré comme inopérant, et ladite étape de contrôle de fonctionnement du réseau Ethernet opérationnel est alors suivie de ladite étape (100) de détermination d'un réseau Ethernet opérationnel.

**5.** Procédé selon la revendication 2 ou 4, **caractérisé en ce que** chaque module de gestion physique de lien à scruter est choisi parmi un ensemble (E) qui est propre à chaque équipement terminal et qui est défini par regroupement d'informations qui identifient chacune un module de gestion physique de lien relatif à un réseau Ethernet qui n'est pas inopérant.

**6.** Procédé selon la revendication 5, caractérisé en ce ledit ensemble est une liste ordonnée selon la fréquence d'utilisation des réseaux Ethernet dudit système.

**7.** Procédé selon la revendication 5 ou 6, **caractérisé en ce qu'**au cours de ladite de contrôle de fonctionnement du réseau Ethernet opérationnel, dans le cas où une trame dédiée (TRE) susceptible d'être reçue n'est pas reçue pendant ladite valeur choisie de la période de temps (TEMP), l'information qui identifie le module de gestion physique de lien relatif au réseau inopérant est supprimée dudit ensemble.

**8.** Procédé selon l'une des revendications 1 à 7, **caractérisé en ce que** chaque valeur de ladite période de temps (TEMP) est définie aléatoirement dans une plage de valeurs dont la borne inférieure est au moins égale à deux fois la durée maximale d'émission de la trame dédiée entre deux équipements terminaux dudit système.

**9.** Procédé selon la revendication 2 ou l'une des revendications 4 à 8, **caractérisé en ce qu'**il comporte une étape (300) de surveillance de ladite pluralité de réseaux Ethernet indépendants par une entité au cours de laquelle une information désignant le réseau Ethernet opérationnel et des informations désignant le ou les réseaux inopérants sont obtenues afin de calculer des statistiques et/ou générer des alarmes et/ou obtenir un historique de l'évolution du fonctionnement de chacun des réseaux Ethernet.

10. Dispositif destiné à être mis en oeuvre dans un équipement terminal connecté à une pluralité de réseaux Ethernet indépendants les uns des autres et permettant chacun la communication de données entre l'équipement terminal et au moins un autre équipement terminal, chaque équipement terminal comprenant une pluralité de modules de gestion physique de lien, chaque module de gestion physique de lien étant associé à un des réseaux Ethernet, chaque équipement terminal comprenant un module de gestion du média (MAC) qui implémente entre autre le protocole Ethernet, le dispositif étant relié au module de gestion du média (MAC) d'un équipement terminal et à chaque module de gestion physique dudit équipement terminal, le dispositif comportant des moyens (MDRO) pour déterminer un réseau Ethernet opérationnel et des moyens (MCRO) pour contrôler le fonctionnement dudit réseau Ethernet opérationnel, le dispositif étant **caractérisé en ce que** lesdits moyens (MDRO, MCRO) utilisent :

    - des moyens (MITR) pour identifier qu'une trame reçue via l'un des modules de gestion physique de lien est une trame dédiée,
    - des moyens (MCRE) pour choisir l'un des modules de gestion physique,
    - des moyens (MTEMP) pour définir une valeur d'une période de temps,
    - des moyens (MSCRT) pour scruter un module de gestion physique de lien choisi pendant ladite valeur de la période de temps, dans l'attente de la réception d'une trame dédiée émise par un équipement terminal,
    - des moyens (MRO) pour désigner comme étant opérationnel le réseau Ethernet relatif à un module de gestion physique de lien via lequel une trame dédiée a été reçue pendant ladite valeur choisie de la période de temps, et
    - des moyens (MRIO) pour désigner comme étant inopérant le réseau Ethernet opérationnel lorsque qu'aucune trame dédiée n'a pas été reçue pendant ladite valeur choisie de la période de temps.

11. Dispositif selon la revendication 10, **caractérisé en ce que** lesdits moyens (MCRE) pour choisir l'un des modules de gestion physique choisissent un module de gestion physique de lien parmi un ensemble (E) qui est propre à chaque équipement terminal et qui est défini par regroupement d'informations qui identifient chacune un module de gestion physique de lien relatif à un réseau Ethernet qui n'est pas inopérant.

12. Dispositif selon la revendication 11, caractérisé en

ce que ledit ensemble est une liste ordonnée selon la fréquence d'utilisation des réseaux Ethernet dudit système.

13. Dispositif selon la revendication 11 ou 12, **caractérisé en ce que** lesdits moyens (MCRO) pour contrôler le fonctionnement dudit réseau Ethernet opérationnel comportent des moyens pour supprimer dudit ensemble l'information qui identifie le module de gestion physique de lien relatif à un réseau inopérant.

14. Dispositif selon l'une des revendications 10 à 13, **caractérisé en ce que** chaque valeur de ladite période de temps est définie aléatoirement dans une plage de valeurs dont la borne inférieure est au moins égale à deux fois la durée maximale d'émission de la trame dudit type entre deux équipements terminaux dudit système.

15. Dispositif selon l'une des revendications 10 à 14, **caractérisé en ce qu'**il comporte des moyens (MODI) pour obtenir une information désignant le réseau Ethernet opérationnel et des informations désignant le ou les réseaux inopérants et des moyens pour calculer des statistiques et/ou générer des alarmes et/ou obtenir un historique de l'évolution du fonctionnement de chacun des réseaux Ethernet.

16. Equipement terminal d'un réseau de type Ethernet **caractérisé en ce qu'**il comporte un dispositif conforme à l'une des revendications 10 à 15.

17. Système de redondance d'un réseau de type Ethernet destiné à la communication de données entre au moins deux équipements terminaux, **caractérisé en ce qu'**il comporte :

    - au moins un autre réseau de type Ethernet indépendant et qui permet la communication de données entre les dits au moins deux équipements terminaux,
    - et **en ce que** chaque équipement terminal est conforme à la revendication 16.

**Patentansprüche**

1. Datenkommunikationsverfahren zwischen mindestens zwei Endgeräten über mehrere Netzwerke des Typs des Ethernet-Netzwerks, die voneinander unabhängig sind und jeweils die Kommunikation von Daten zwischen den mindestens zwei Endgeräten ermöglichen, wobei jedes Endgerät mehrere physikalische Verbindungsverwaltungsmodule (PHYj) aufweist, wobei jedes physikalische Verbindungsverwaltungsmodul (PHYj) einem der Ethernet-Netzwerke zugeordnet wird, wobei jedes Endgerät ein Medienverwaltungsmodul (MAC) aufweist, das unter anderem das Ethernet-Protokoll implementiert, wobei das Verfahren von einem Gerät (DISP) ausgeführt wird, das mit dem Medienverwaltungsmodul (MAC) eines Endgeräts und mit jedem physikalischen Verwaltungsmodul (PHYj) des Endgeräts verbunden ist, und **dadurch gekennzeichnet ist, dass** es aufweist:

- einen Schritt (100) des Bestimmens eines sogenannten betriebsbereiten Ethernet-Netzwerks aus den mehreren Ethernet-Netzwerken, während dem mindestens eines der physikalischen Verbindungsverwaltungsmodule während eines zuvor gewählten Wertes einer Zeitdauer (TEMP) bis zum Empfangen eines dedizierten Frames (TRE), der von einem Endgerät gesendet wird, gescannt wird,

- in dem Fall, in dem kein dedizierter Frame (TRE) während des gewählten Wertes der Zeitdauer (TEMP) empfangen wird, wird ein anderes physikalisches Verbindungsverwaltungsmodul gescannt, und

- in dem Fall, in dem ein dedizierter Frame (TRE) während des gewählten Wertes der Zeitdauer (TEMP) empfangen wird, wird das Ethernet-Netzwerk in Bezug auf das physikalische Verbindungsverwaltungsmodul, das gerade gescannt wird, als betriebsbereit angesehen, und

- einen Schritt (200) der Funktionskontrolle des betriebsbereiten Ethernet-Netzwerks.

2. Verfahren nach Anspruch 1, **dadurch gekennzeichnet, dass** bei dem Schritt (200) der Funktionskontrolle des betriebsbereiten Ethernet-Netzwerks das physikalische Verbindungsverwaltungsmodul, das sich auf das betriebsbereite Ethernet-Netzwerk bezieht, während eines zuvor gewählten Wertes einer Zeitdauer (TEMP) bis zum Empfangen eines dedizierten Frames, der von einem Endgerät gesendet wird, gescannt wird,

- in dem Fall, in dem ein dedizierter Frame (TRE) während des gewählten Wertes der Zeitdauer (TEMP) empfangen wird, ein dedizierter Frame (TRE) über das physikalische Verbindungsverwaltungsmodul in Bezug auf das betriebsbereite gesendet wird, und

- in dem Fall, in dem kein dedizierter Frame (TRE) während des gewählten Wertes der Zeitdauer (TEMP) empfangen wird, das Ethernet-Netzwerk, das bis dahin betriebsbereit ist, als nicht betriebsbereit angesehen wird, und auf den Schritt der Funktionskontrolle des betriebsbereiten Ethernet-Netzwerks dann der Schritt (100) des Bestimmens eines betriebsbereiten Ethernet-Netzwerks folgt.

3. Verfahren nach Anspruch 1, **dadurch gekennzeichnet, dass** bei dem Schritt (100) des Bestimmens eines betriebsbereiten Ethernet-Netzwerks mindestens eines der physikalischen Verbindungsverwaltungsmodule während eines zuvor gewählten Wertes einer Zeitdauer (TEMP) bis zum Empfangen von einer Anzahl an Frames, die gleich der Anzahl an Endgeräten ist, die geeignet sind, einen dedizierten Frame (TRE) zu senden, gescannt wird,

- in dem Fall, in dem ein dedizierter Frame (TRE), der geeignet ist, von einem Endgerät gesendet zu werden, nicht als während des gewählten Wertes der Zeitdauer (TEMP) empfangen worden identifiziert worden ist, ein anderes physikalisches Verbindungsverwaltungsmodul gescannt wird, und

- in dem Fall, in dem ein dedizierter Frame (TRE), der von jedem Endgerät gesendet wird, als während des gewählten Wertes der Zeitdauer (TEMP) empfangen worden identifiziert worden ist, das Ethernet-Netzwerk in Bezug auf das physikalische Verbindungsverwaltungsmodul, das gerade gescannt wird, als betriebsbereit angesehen wird.

4. Verfahren nach Anspruch 1 oder 3, **dadurch gekennzeichnet, dass** bei dem Schritt (200) der Funktionskontrolle des betriebsbereiten Ethernet-Netzwerks das physikalische Verbindungsverwaltungsmodul, das sich auf das betriebsbereite Ethernet-Netzwerk bezieht, während eines zuvor gewählten Wertes einer Zeitdauer (TEMP) bis zum Empfangen von so vielen dedizierten Frames (TRE) wie Endgeräte, die geeignet sind, dedizierte Frames (TRE) zu senden, gescannt wird,

- in dem Fall, in dem ein dedizierter Frame (TRE), der von jedem Endgerät gesendet wird, als während des gewählten Wertes der Zeitdauer (TEMP) empfangen worden identifiziert worden ist, ein dedizierter Frame (TRE) über das physikalische Verbindungsverwaltungsmodul in Bezug auf das betriebsbereite Netz gesendet wird, und

- in dem Fall, in dem ein dedizierter Frame (TRE), der wahrscheinlich von einem Endgerät gesendet worden ist, nicht als während des gewählten Wertes der Zeitdauer (TEMP) empfangen worden identifiziert worden ist, das Ethernet-Netzwerk, das bis dahin betriebsbereit ist, als nicht betriebsbereit angesehen wird, und auf den Schritt der Funktionskontrolle des betriebsbereiten Ethernet-Netzwerks dann der Schritt (100) des Bestimmens eines betriebsbereiten Ethernet-Netzwerks folgt.

5. Verfahren nach Anspruch 2 oder 4, **dadurch ge-**

**kennzeichnet, dass** jedes physikalische Verbindungsverwaltungsmodul, das zu scannen ist, aus einer Gruppe (E) ausgewählt wird, die jedem Endgerät eigen ist und die durch Zusammenfassen von Informationen definiert wird, die jeweils ein physikalisches Verbindungsverwaltungsmodul in Bezug auf ein Ethernet-Netzwerk identifizieren, das nicht betriebsbereit ist.

6. Verfahren nach Anspruch 5, **dadurch gekennzeichnet, dass** die Gruppe eine Liste ist, die nach der Benutzungshäufigkeit der Ethernet-Netzwerke des Systems geordnet wird.

7. Verfahren nach Anspruch 5 oder 6, **dadurch gekennzeichnet, dass** bei der Funktionskontrolle des betriebsbereiten Ethernet-Netzwerks in dem Fall, bei dem ein dedizierter Frame (TRE), der geeignet ist, empfangen zu werden, während des gewählten Wertes der Zeitdauer (TEMP) nicht empfangen wird, die Information, die das physikalische Verbindungsverwaltungsmodul in Bezug auf das nicht betriebsbereite Netzwerk identifiziert, von der Gruppe gelöscht wird.

8. Verfahren nach einem der Ansprüche 1 bis 7, **dadurch gekennzeichnet, dass** jeder Wert der Zeitdauer (TEMP) in einem Wertebereich zufällig definiert wird, dessen untere Grenzen mindestens gleich dem Zweifachen der maximalen Sendedauer des dedizierten Frames zwischen zwei Endgeräten des Systems ist.

9. Verfahren nach Anspruch 2 oder nach einem der Ansprüche 4 bis 8, **dadurch gekennzeichnet, dass** es einen Schritt (300) des Überwachens der mehreren unabhängigen Ethernet-Netzwerke durch eine Einheit aufweist, während dem eine Information, die das betriebsbereite Ethernet-Netzwerk bezeichnet, und Informationen, die das oder die nicht betriebsbereiten Netzwerke bezeichnen, erhalten werden, um Statistiken zu berechnen und/oder Alarme zu erzeugen und/oder eine Historie der Entwicklung des Betriebs jedes der Ethernet-Netzwerke zu erhalten.

10. Vorrichtung, die dazu bestimmt ist, in einem Endgerät eingesetzt zu werden, das an mehrere Ethernet-Netzwerke angeschlossen ist, die voneinander unabhängig sind und jeweils die Kommunikation von Daten zwischen dem Endgerät und mindestens einem anderen Endgerät ermöglichen, wobei jedes Endgerät mehrere physikalische Verbindungsverwaltungsmodule aufweist, wobei jedes physikalische Verbindungsverwaltungsmodul einem der Ethernet-Netzwerke zugeordnet ist, wobei jedes Endgerät ein Medienverwaltungsmodul (MAC) aufweist, das unter anderem das Ethernet-Protokoll implementiert, wobei die Vorrichtung mit einem Medienverwaltungsmodul (MAC) eines Endgeräts und mit jedem physikalischen Verwaltungsmodul des Endgeräts verbunden ist, wobei die Vorrichtung Mittel (MDRO), um ein betriebsbereites Ethernet-Netzwerk zu bestimmen, und Mittel (MCRO) aufweist, um das Funktionieren des betriebsbereiten Ethernet-Netzwerks zu kontrollieren, wobei die Vorrichtung **dadurch gekennzeichnet ist, dass** die Mittel (MDRO, MCRO) verwenden:

- Mittel (MITR), um zu identifizieren, dass ein Frame, der über eines der physikalischen Verbindungsverwaltungsmodule empfangen wird, ein dedizierter Frame ist,
- Mittel (MCRE), um eines der physikalischen Verbindungsverwaltungsmodule auszuwählen,
- Mittel (MTEMP), um einen Wert einer Zeitdauer zu definieren,
- Mittel (MSCRT), um ein physikalisches Verbindungsverwaltungsmodul zu scannen, das während des Wertes der Zeitdauer bis zum Empfangen eines dedizierten Frames, der von einem Endgerät gesendet wird, ausgewählt ist,
- Mittel (MRO), um das Ethernet-Netzwerk in Bezug auf ein physikalisches Verbindungsverwaltungsmodul zu bezeichnen, über das ein dedizierter Frame während des gewählten Wertes der Zeitdauer empfangen worden ist, und
- Mittel (MRIO), um das betriebsbereite Ethernet-Netzwerk als nicht betriebsbereit zu bezeichnen, wenn kein dedizierter Frame während des gewählten Wertes der Zeitdauer empfangen worden ist.

11. Vorrichtung nach Anspruch 10, **dadurch gekennzeichnet, dass** die Mittel (MCRE), um eines der physikalischen Verbindungsverwaltungsmodule auszuwählen, ein physikalisches Verbindungsverwaltungsmodul aus einer Gruppe (E) auswählen, das jedem Endgerät eigen ist und das durch das Zusammenfassen von Informationen definiert ist, die jeweils ein physikalisches Verbindungsverwaltungsmodul in Bezug auf ein Ethernet-Netzwerk identifizieren, das nicht betriebsbereit ist.

12. Vorrichtung nach Anspruch 11, **dadurch gekennzeichnet, dass** die Gruppe eine Liste ist, die nach der Benutzungshäufigkeit der Ethernet-Netzwerke des Systems geordnet ist.

13. Vorrichtung nach Anspruch 11 oder 12, **dadurch gekennzeichnet, dass** die Mittel (MCRO), um das Funktionieren des betriebsbereiten Ethernet-Netzwerks zu kontrollieren, Mittel aufweisen, um von der Gruppe die Information zu löschen, die das physikalische Verbindungsverwaltungsmodul in Bezug auf ein nicht betriebsbereites Ethernet-Netzwerk identifiziert.

**14.** Vorrichtung nach einem der Ansprüche 10 bis 13, **dadurch gekennzeichnet, dass** jeder Wert der Zeitdauer in einem Wertebereich zufällig definiert ist, dessen untere Grenze mindestens gleich dem Zweifachen der maximalen Sendedauer des Frames des Typs zwischen zwei Endgeräten des Systems ist.

**15.** Vorrichtung nach einem der Ansprüche 10 bis 14, **dadurch gekennzeichnet, dass** sie Mittel (MODI) zum Erhalten von einer Information, die das nicht betriebsbereite Ethernet-Netzwerk bezeichnet, und von Informationen, die das oder die nicht betriebsbereiten Netzwerke bezeichnen, und Mittel aufweist, um Statistiken zu berechnen und/oder Alarme zu erzeugen und/oder eine Historie der Entwicklung des Funktionierens jedes der Ethernet-Netzwerke zu erhalten.

**16.** Endgerät eines Netzwerks des Typs des Ethernet-Netzwerks, **dadurch gekennzeichnet, dass** es eine Vorrichtung gemäß einem der Ansprüche 10 bis 15 aufweist.

**17.** Redundanzsystem eines Netzwerks des Typs des Ethernet-Netzwerks, das zur Datenkommunikation zwischen mindestens zwei Endgeräten bestimmt ist, **dadurch gekennzeichnet, dass** es aufweist:

    - mindestens ein anderes Netzwerk des Typs des Ethernet-Netzwerks, das unabhängig ist und das die Kommunikation von Daten zwischen den mindestens zwei Endgeräten ermöglicht,
    - und dadurch, dass jedes Endgerät gemäß dem Anspruch 16 ist.

**Claims**

**1.** Method of communication of data between at least two terminal devices from a plurality of Ethernet-type networks that are independent of each other and each allow the communication of data between said at least two terminal devices, each terminal device comprising a plurality of physical link management modules (PHYj), each physical link management module (PHYj) being associated with one of the Ethernet networks, each terminal device comprising a media management module (MAC) which implements amongst others the Ethernet protocol, the method being carried out by a device (DISP) linked to the media management module (MAC) of a terminal device and to each physical link management module (PHYj) of said terminal device and being **characterised in that** it comprises:

    - a step (100) of determining an Ethernet network described as operational from said plurality of Ethernet networks, during which at least one of the physical link management modules is scanned for a pre-specified value of a time period (TEMP), pending reception of a dedicated frame (TRE) transmitted by a terminal device,
    - if a dedicated frame (TRE) is not received during said selected value for time period (TEMP), another physical link management module is scanned, and
    - if a dedicated frame (TRE) is received during said selected value for time period (TEMP), the Ethernet network relative to said physical link management module being scanned is considered as operational, and
    - a step (200) of monitoring the function of said operational Ethernet network.

**2.** Method according to claim 1, **characterised in that** during said step (200) of monitoring the function of the operational Ethernet network, the physical link management module relative to said operational network is scanned for a previously selected value of a time period (TEMP) pending reception of a dedicated frame transmitted by a terminal device,

    - if a dedicated frame (TRE) is received during said selected value of time period (TEMP), a dedicated frame (TRE) is transmitted via the physical link management module relating to said operation network, and
    - if a dedicated frame (TRE) is not received during said selected value of time period (TEMP), the Ethernet network previously operational is considered inoperative and said step of monitoring the function of the operational Ethernet network is then followed by said step (100) of determining an operational Ethernet network.

**3.** Method according to claim 1, **characterised in that** during said step (100) of determining an operational Ethernet network, at least one of the physical link management modules is scanned for a previously selected value of a time period (TEMP) pending reception of a number of frames equal to the number of terminal devices liable to emit a dedicated frame (TRE),

    - if a dedicated frame (TRE) liable to be transmitted by a terminal device has not been identified as being received during the selected value of the time period (TEMP), another physical link management module is scanned, and
    - if a dedicated frame (TRE) transmitted by each terminal device has been identified as being received during the selected value of time period (TEMP), the Ethernet network relating to said physical link management module being scanned is considered as being operational.

**4.** Method according to claim 1 or 3, **characterised in that** during said step (200) of monitoring the function of the operational Ethernet network, the physical link management module relating to said operational network is scanned for a previously selected value of a time period (TEMP) pending reception of as many dedicated frames (TRE) as there are terminal devices liable to transmit dedicated frames (TRE),

- if a dedicated frame (TRE) transmitted by each terminal device has been identified as being received during the selected value of time period (TEMP), a dedicated frame (TRE) is transmitted via the physical link management module relating to said operational network, and
- if a dedicated frame (TRE) liable to be transmitted by a terminal device has not been identified as being received during the selected value of time value (TEMP), the previously operational Ethernet network is considered inoperative, and said step of monitoring the function of the operational Ethernet network is then followed by said step (100) of determining an operational Ethernet network.

**5.** Method according to claim 2 or 4, **characterised in that** each physical link management module to be scanned is selected from a set (E) specific to each terminal device and defined by grouping of information each identifying a physical link management module relating to an Ethernet network which is not inoperative.

**6.** Method according to claim 5, **characterised in that** said set is a list sequenced according to frequency of use of the Ethernet networks of said system.

**7.** Method according to claim 5 or 6, **characterised in that** during said monitoring of operation of the operational Ethernet network, if a dedicated frame (TRE) liable to be received is not received during said selected value of the time period (TEMP), the information which identifies the physical link management module relating to the inoperative network is deleted from said set.

**8.** Method according to any of claims 1 to 7, **characterised in that** each value of said time period (TEMP) is defined at random within a range of values, the lower limit of which is at least equal to twice the maximum duration of transmission of the dedicated frame between two terminal devices of said system.

**9.** Method according to claim 2 or any of claims 4 to 8, **characterised in that** it comprises a step (300) of monitoring of said plurality of independent Ethernet networks by an entity, during which information designating the operational Ethernet network and information designating the inoperative network or networks are obtained in order to calculate statistics and/or generate alarms and/or obtain a history of development of function of each of the Ethernet networks.

**10.** Device intended to be implemented in a terminal device connected to a plurality of Ethernet networks that are independent of each other and each allow the communication of data between said terminal device and at least another terminal device, each terminal device comprising a plurality of physical link management modules, each physical link management module being associated with one of the Ethernet networks, each terminal device comprising a media management module (MAC) which implements amongst others the Ethernet protocol, the device being linked to the media management module (MAC) of a terminal device and to each physical link management module of said terminal device, the device comprising means (MDRO) to determine an operational Ethernet network and means (MCRO) to monitor the function of said operational Ethernet network, the device being **characterised in that** said means (MDRO, MCRO) use:

- means (MITR) to identify that a frame received via one of the physical link management modules is a dedicated frame,
- means (MCRE) to select one of the physical management modules,
- means (MTEMP) to define a value of a time period,
- means (MSCRT) to scan a physical link management module selected during said value of time period pending reception of a dedicated frame transmitted by a terminal device,
- means (MRO) to designate as operational the Ethernet network relating to a physical link management module via which a dedicated frame has been received during said selected value of time period, and
- means (MRIO) to designate the operational Ethernet network as inoperative when no dedicated frame has been received during said selected value of time period.

**11.** Device according to claim 10, **characterised in that** said means (MCRE) to select one of the physical management modules selects a physical link management module from a set (E) which is specific to each terminal device and which is defined by grouping information each identifying a physical link management module relating to an Ethernet network which is not inoperative.

**12.** Device according to claim 11, **characterised in that** said set is a list sequenced according to the frequency use of the Ethernet networks of said system.

13. Device according to claim 11 or 12, **characterised in that** said means (MCRO) to monitor the function of said operational Ethernet network comprises means for deleting from the set the information which identifies the physical link management module relating to an inoperative network.

14. Device according to any of claims 10 to 13, **characterised in that** each value for said time period is defined at random from a range of values, the lower limit of which is at least equal to twice the maximum duration of transmission of the frame of said type between two terminal devices of said system.

15. Device according to any of claims 10 to 14, **characterised in that** it comprises means (MODI) to obtain information designating the operational Ethernet network and information designating the inoperative network or networks and means to calculate statistics and/or generate alarms and/or obtain a history of development of function of each of the Ethernet networks.

16. Terminal device of an Ethernet type network, **characterised in that** it comprises a device according to any of claims 10 to 15.

17. Redundancy system of an Ethernet-type network intended for communication of data between at least two terminal devices, **characterised in that** it comprises:

    - at least one other independent Ethernet-type network which allows communication of data between said at least two terminal devices,
    - and **in that** each terminal device corresponds to claim 16.

ETH

T1

MGL1

RT1

C1

RT3

T3

MGL3

TAB1

TAB3

T2

MGL2

TAB2

C2

TAB4

T4

MGL4

RT2

RT4

Fig. 1

MGLi

TX

RX

PHY

MAC

HP

Fig. 2

Fig. 3

Fig. 4

Fig. 5

Fig. 6

**EP 2 238 717 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002152320 A
- US 2007076590 A
- EP 1394985 A